# EUROPEAN PATENT APPLICATION

(11) **EP 2 645 318 A1**
(43) Date of publication of application: **02.10.2013**
(21) Application number: 13405040.0
(22) Date of filing: 28.03.2013
(51) Int. Cl.: G06Q 10/08

(54) **Methods and devices for monitoring the integrity of an article during transporting said article**

(30) Priority: 28.03.2012 US 201213432635
(71) Applicant: Berlinger & Co. AG, 9608 Ganterschwil (CH)
(72) Inventor: Oertli, Christian, 9621 Oberhelfenschwil (CH)
(74) Representative: Frei Patent Attorneys

(57) **Abstract**

The method for obtaining information relating to the integrity of an article (2) as assessed from an exposure of said article to physical or environmental conditions during a time span comprises the steps of
b) subsequently obtaining a first to an N-th data point, each of said N data points representative of a value related to said physical or environmental conditions obtained by subsequently sensing said physical or environmental conditions a first to an N-th time;
c) discarding a portion of said N data points;
d) creating a data set (DS) comprising said N data points with the exception of said discarded data points.
And step c) may comprise carrying out, for the second to the N-th data point, the steps
c2) determining a deviation of the value represented by the respective data point from a value, referred to as temporary extremum, determined in dependence of earlier determined values;
c3) discarding the respective data point if said deviation is smaller than a difference threshold or if said deviation is smaller than or equal to a difference threshold.

A corresponding device (1) is described, too.

## Description

### Technical Field

The invention relates to methods and devices for monitoring the exposure of an article to physical or environmental conditions during a transoport of the article. More particularly, the invention relates to ways of estimating the integrity of a transported article as assessed from the exposure of the article to physical or environmental conditions during the transport. The invention relates to methods and apparatuses according to the opening clauses of the claims. Such devices, also referred to as "tags" find application, e.g., when sensitive or delicate goods are transported, such as pharmaceutical products or foods or other fragile goods.

### Background of the Invention

When sensitive or delicate goods such as pharmaceutical products or foods or fragile goods are transported, it can be desirable to monitor their exposure to specific hazards such as particularly high or low temperatures, particularly high or low humidity (water-content of ambient air), or particularly strong impacts (hits, blows), so as to be able to estimate the integrity of the transported goods.

Tags for accomplishing such tasks are known in the art. E.g., from US 2005/0157774 A1, a temperature monitor suitable for such purposes is known.

A method for accomplishing such tasks is also suggested in US 7 487 037 B2.

### Summary of the Invention

It is an object of the invention to provide an alternative way of obtaining information relating to the integrity of an article as assessed from an exposure of said article to physical or environmental conditions during a time span, in particular to provide a corresponding method and a corresponding device.

Another object of the invention is to provide a cost-efficient device and a corresponding method.

Another object of the invention is to provide a simplified method and a corresponding device.

Another object of the invention is to provide a possibility to analyze data obtained in a tag in a handy way.

Further objects emerge from the description and embodiments below.

At least one of these objects is at least partially achieved by devices and methods according to the patent claims.

The method for obtaining information relating to the integrity of an article as assessed from an exposure of said article to physical or environmental conditions during a time span comprises the steps of
b) subsequently obtaining a first to an N-th data point, each of said N data points representative of a value related to said physical or environmental conditions obtained by subsequently sensing said physical or environmental conditions a first to an N-th time;
c) discarding a portion of said N data points;
d) creating a data set comprising said N data points with the exception of said discarded data points.

This way, it is possible to dispense with a multitude of data points. Thus, it is possible to carry out the method using only a relatively small storage space for data points. And an analysis of such a data set can be accomplished in a relatively small amount of time and with relatively simple means.

Usually, said physical or environmental conditions mentioned in step b) are such conditions to which said article is exposed during said time span.

N is an integer, e.g., N ≥ 10, usually N ≥ 100 or rather N ≥ 1000.

In many applications of the invention, said time span is a time span during which said article is transported.

In many applications of the invention, said subsequently sensing said physical or environmental conditions mentioned in step b) is carried out in constant time intervals. Accordingly, from obtaining one value to obtaining the following value, each time substantially the same time interval elapses, and, accordingly, from obtaining one data point to obtaining the following data point, also that same time interval elapses each time. In this case, said physical or environmental conditions are periodically sensed or measured. However, it is generally also possible to provide a non-periodic scheme for sensing and, accordingly, varying time intervals between subsequent sensing, events.

Usually, said discarded data points are deleted rather soon. Thus, they do not occupy storage space anymore.

It will usually be provided that a first data point is not discarded, but comprised in said data set.

Typically, said article is transported in or as a package, wherein the term "package" as used in the present patent application generically refers to any article or combination of articles and/or objects that can be transported from one location to another. It may, e.g., refer to a single article (i.e., the lowest level of packaging such as a single bottle or a single vial) or to a carton containing one or more articles, or to a box containing one or more cartons, or to a pallet on which one or more boxes are arranged, or to a shipping container containing one or more pallets or boxes or cartons, or to transport vehicle such as a train, a ship, a truck or an airplane carrying one or more pallets or shipping containers. Typically, a device, in particular a tag, is attached to a package comprising said article, the device implementing a method according to the invention or portions thereof.

In one embodiment, step c) is carried out during said time span. And in particular, step c) is carried out during a transport of said article.

In one embodiment which may be combined with one or more of the before-addressed embodiments, step d) is carried out during said time span. And in particular, step d) is carried out during a transport of said article.

In one embodiment which may be combined with one or more of the before-addressed embodiments, step c) comprises carrying out, for the second to the N-th data point, the steps of
c2) determining a deviation of the value represented by the respective data point from a value, referred to as temporary extremum, determined in dependence of earlier determined values;
c3) discarding the respective data point if said deviation is smaller than a difference threshold or if said deviation is smaller than or equal to a difference threshold.

This turned out to be a particularly useful way of deciding whether or not to discard a data point. The term deviation designates an absolute (i.e. never negative) value of a difference. Said extremum either is a minimum or a maximum.

In one embodiment referring to the last-addressed embodiment, said difference threshold is a predetermined value or is selected from two or more predetermined values. In this case, the value or the two or more values can be fixed before said time span, e.g., at the time of manufacturing a device implementing the method.

In one embodiment referring to one or both of the two last-addressed embodiments, step c) comprises carrying out, for the n-th data point, 2 ≤ n ≤ N, the step of c1) determining the respective n-th temporary extremum.

Therein, n designates an integer. In this case, for the second to the last (=N-th) measured value, a temporary extremum is determined.

In one embodiment referring to the last-addressed embodiment, step c1) comprises the steps of
c11) assigning the value represented by the n-th data point to said n-th temporary extremum if a deviation of said value represented by the n-th data point from the n-1-th temporary extremum is at least as large as said difference threshold or if said deviation of said value represented by the n-th data point from the n-1-th temporary extremum is larger than said difference threshold;
c12) assigning the n-1-th temporary extremum to said n-th temporary extremum otherwise.

The "otherwise" in step c12) can be further described by saying that the n-1-th temporary extremum is assigned to said n-th temporary extremum if said deviation of said value represented by the n-th data point from the n-1-th temporary extremum is smaller than said difference threshold and if said deviation of said value represented by the n-th data point from the n-1-th temporary extremum is smaller than or equal to said difference threshold, respectively.

Usually, it will be provided that the first temporary extremum is the value represented by the first data point.

It is possible to provide that in said data set, no data points representative of said physical or environmental conditions are present which would not correspond to a value as obtained by said sensing. This way, e.g., no values obtained by averaging values obtained by said sensing would be present in the data set.

In one embodiment which may be combined with one or more of the before-addressed embodiments comprising steps c2) and c3), step c) comprises carrying out, for the second to the N-th data point, the steps of
c4) selecting one of two or more predetermined values in dependence of a value referred to as decisive value;
c5) assigning the selected predetermined value to said difference threshold.

This way, it is possible to adjust said difference threshold during said time span in a meaningful way. In particular, in value regions of particular interest, more data points or a higher precision may be provided this way.

It can in particular be provided that said decisive value depends on the value represented by the n-th data point. But it can additionally or alternatively be provided that said decisive value depends on the value represented by the n-1-th data point.

More particularly, it can be provided that said decisive value is said value represented by the n-th data point or that it is said value represented by the n-1-th data point. More particularly, said decisive value can be, for each of said second to said N-th data point, said value represented by the n-th data point (or, alternatively, said value represented by the n-1-th data point).

In a device in which this functionality is implemented, data representative of said two or more predetermined values will usually be stored in a storage unit, in particular in non-volatile memory.

In one embodiment referring to the last-addressed embodiment, step c4) comprises the step of
c41) determining whether or not said decisive value is within a predetermined value range;
c42) assigning a first of said two or more predetermined values to said difference threshold if said decisive value is comprised in said predetermined value range;
c43) assigning a second of said two or more predetermined values to said difference threshold if said decisive value is not comprised in said predetermined value range.

The term "predetermined" can here be understood as "pre-selected."

In particular, it may be provided that said predetermined value range is selected in dependence of predescribed limitations for said article. Therein, said predescribed limitations for said article can in particular be limitations for the exposure of said article to said physical or environmental conditions.

Said predetermined value range can describe an open interval or a closed interval or a half-open interval.

In a device in which this functionality is implemented, data representative of said predetermined value range will usually be stored in a storage unit, in particular in non-volatile memory.

In one embodiment referring to the last-addressed embodiment, said predetermined value range represents predescribed limitations for said article, and said first of said two or more predetermined values is larger than said second of said two or more predetermined values, e.g. by a factor of at least 1.5 or even by a factor of at least two.

In one embodiment which may be combined with one or more of the before-addressed embodiments, the method comprises carrying out, for each not discarded data point, the step of
f) determining whether or not the value represented by the respective data point is within a value range characteristic for said article;
   and carrying out the step of
g) providing in said data set one or more markers distinguishing data points representative of a value within said value range characteristic for said article from data points representative of a value outside said value range characteristic for said article.

This can greatly facilitate an analysis and/or a graphic presentation of data comprised in the data set.

In an example of embodying step g), in said data set, each data point representative of a value outside said value range characteristic for said article is provided with a marker, e.g,. a specific character or piece of code. Or: By means of a first and a second marker, a sequence (in particular each sequence) of one or more data points representative of values outside said value range characteristic for said article is marked. For example, when a value is obtained which is outside a value range characteristic for said article, a first marker is inserted in said data set before the respective corresponding data point if the before-obtained value is within said value range characteristic for said article, and when a value is obtained which is within said value range characteristic for said article, a second marker is inserted in said data set before the respective corresponding data point if the before-obtained value is outside said value range characteristic for said article.

Alternatively, one could provide markers in the data set for values and value ranges, respectively, inside said value range characteristic for said article.

It can be provided that said value range characteristic for said article represents predescribed limitations for said article, in particular limitations for the exposure of said article to said physical or environmental conditions.

Said value range characteristic for said article can describe an open interval or a closed interval or a half-open interval.

Said value range characteristic for said article can be identical with said predetermined value range mentioned in step c41), but may also be different therefrom.

In one embodiment which may be combined with one or more of the before-addressed embodiments, the method comprises carrying out, for each data point of said portion of data points, the step of
e) deleting the respective discarded data point before an over-next data point is obtained.

A deleted data point does not occupy any storage space anymore in a device in which the method is implemented.

In one embodiment which may be combined with one or more of the before-addressed embodiments, the method comprises the step of
h) providing, in said data set and for each of said data points comprised in said data set, data related to a point in time at which the respective data point has been obtained and at which the respective value represented by the respective data point has been obtained, respectively.

This way, it is possible to have, in the data set, a time stamp for each data point (and corresponding measured value) comprised in the data set. This can greatly facilitate an analysis and/or graphic presentation of the data set.

In one embodiment which may be combined with one or more of the before-addressed embodiments, the method comprises the step of
j) producing a file comprising data representative of a graphic representation of said data set.

Such a file can be very useful and in particular enable or at least facilitate a quick and simple analysis of the data set and therewith a quick and simple evaluation of the integrity of the article. Such a file may be transmitted to an external appliance, in particular for displaying said graphic representation, e.g., using an interface described further below. Step j) may be, e.g., be initiated (or finalized) in reaction to receiving an indication that said time span has ended.

In one embodiment referring to the before-addressed embodiment, in addition, step h) is carried out. In this case, a particularly useful graphic representation of the data set may be accomplished, as a time axis can be provided therein, allowing to clearly associate each data point with a corresponding point in time. In said graphic representation, the data points in the data set can thus be illustrated in the order given by the respective associated points in time, and versus time.

In one embodiment which may be combined with one or more of the before-addressed embodiments, said data set comprises text-representing data. This greatly facilitate an analysis and/or graphic presentation of the data set. In particular, said data points comprised in said data set can be text-representing data and, referring to the last-adressed embodiment, also said data related to said point in time can be text-representing data. Text-representing data have a much wider compatibility than binary data have.

In one embodiment which may be combined with one or more of the before-addressed embodiments, the method comprises the step of
a) providing a device to be located in proximity to said article during said time span;
wherein at least one of steps b), c) and d) is carried out by means of said device.

Said device may, in particular if step b) is carried out by means of said device, comprise at least one sensor for sensing said physical or environmental conditions.

Said device can in particular be a tag to be attached to a package comprising said article.

In one embodiment which may be combined with one or more of the before-addressed embodiments, said physical or environmental conditions comprise a temperature, in particular an ambient temperature. This is useful in case of articles which are particularly temperature sensitive, which may mean that a certain minimum temperature may not be fallen short of, or a certain maximum temperature may not be exceeded, or both. Therein, it will usually be assumed that - typically after some time for equilibration - the temperature measured by means of said device is (at least substantially) the same as the temperature of said article.

In one embodiment which may be combined with one or more of the before-addressed embodiments, said physical or environmental conditions comprise at least one of
- a temperature, in particular an ambient temperature;
- a humidity, in particular an ambient humidity;
- an acceleration.

Determining said acceleration can be useful if said article is mechanically particularly sensitive. It may comprise, e.g., detecting mechanical shocks to which said article is possibly exerted.

Determining said humidity can be useful in case of articles that are particularly sensitive to humidity, which may mean that a certain minimum amount of humidity is required, or that a certain maximum humidity may not be exceeded, or both. This may be accomplished by detecting (in any known way) the amount of water (as contained in ambient air to which said article or a package containing said article is exposed) to which said article is exposed.

In one embodiment which may be combined with one or more of the before-addressed embodiments, the method comprises transporting said article from a source location to a destination location.

The device according to the invention is a device for obtaining information relating to the integrity of an article as assessed from an exposure of said article to physical or environmental conditions during a time span. Said device comprises at least one sensor for sensing said physical or environmental conditions, a storage unit and a control unit. Said control unit is structured and configured for controlling said at least one sensor such that a first to an N-th value related to said physical or environmental conditions are obtained by subsequently sensing said physical or environmental conditions a first to an N-th time by means of said sensor. And said control unit is furthermore structured and configured for obtaining for each of said N values a data point (representative of the respective value) and for discarding a portion of said N data points and for creating and storing in said storage unit a data set comprising said N data points with the exception of said discarded data points.

The invention comprises devices with features of corresponding methods according to the invention, and, vice versa, also methods with features of corresponding devices according to the invention.

The advantages of the devices basically correspond to the advantages of corresponding methods, and, vice versa, the advantages of the methods basically correspond to the advantages of corresponding devices.

Only a limited number of device embodiments are explicitely described below.

In one embodiment of the device, said control unit is structured and configured for carrying out, for carrying out, for the n-th data point, 2 ≤ n ≤ N, the steps of
C2) determining a deviation of the value represented by the respective data point from a value, referred to as n-1-th temporary extremum, determined in dependence of earlier determined values;
C3) discarding the respective data point if said deviation is smaller than a difference threshold or if said deviation is smaller than or equal to a difference threshold;
C1) determining the respective n-th temporary extremum;
wherein step C1) comprises the steps of
C11) assigning the value represented by the respective data point to said n-th temporary extremum if a deviation of said value represented by the respective data point from the n-1-th temporary extremum is at least as large as said difference threshold or if said deviation of said value represented by the respective data point from the n-1-th temporary extremum is larger than said difference threshold;
C12) assigning the n-1-th temporary extremum to said n-th temporary extremum otherwise.

This basically reflects what has been described above for a method.

In one embodiment referring to the last-addressed embodiment, said storage unit comprises a non-volatile memory in which data representative of said difference threshold are stored.

In one embodiment which may be combined with one or more of the before-addressed device embodiments, said storage unit comprises a non-volatile memory in which said data set is stored. In particular, in said non-volatile memory, at least at the end of said time span, no data point of said discarded portion of said N data points is stored.

In one embodiment which may be combined with one or more of the before-addressed device embodiments, said storage unit comprises a non-volatile memory in which data representative of a predetermined value range related to predescribed limitations for said article are stored. This can in particular be useful when the steps 41), 42), 43) mentioned further above are implemented in the device.

In one embodiment which may be combined with one or more of the before-addressed device embodiments, the device comprises an interface for transmitting said data set to an appliance different from said device. This can, e.g., be an interface for wirebound data transmission such as a USB interface or an interface for wireless data transmission.

In one embodiment which may be combined with one or more of the before-addressed device embodiments, said control unit is structured and configured for producing a file comprising data representative of a graphic representation of said data set, and it may furthermore be structured and configured for outputting said file, e.g., using the above-mentioned interface. And furthermore, it may be structured and configured for storing said file in said storage unit, in particular in non-volatile memory.

In one embodiment which may be combined with one or more of the before-addressed device embodiments, the device comprises a display for displaying data, in particular for data indicative of said integrity of said article.

In one embodiment which may be combined with one or more of the before-addressed device embodiments, said device comprises or is a probeless monitor for monitoring said physical or environmental conditions.

In one embodiment which may be combined with one or more of the before-addressed device embodiments, said device is a tag, in particular a tag attachable to a package at which or in which said article is transported. This is a typical way of realizing said device.

Further embodiments and advantages emerge from the dependent claims and the figures.

### Brief Description of the Drawings

Below, the invention is described in more detail by means of examples and the included drawings. The figures show, in a schematized way:
- Fig. 1: a block-diagrammatical illustration of a device and its use;
- Fig. 2: a numeric representation of environmental data;
- Fig. 3: a graphic representation of the environmental data of Fig. 2;
- Fig. 4: an illustration of a data set;
- Fig. 5: an illustration of a data set;
- Fig. 6: an illustration of a data set;
- Fig. 7: a flow chart illustrating how a data set can be obtained.

The described embodiments are meant as examples and shall not confine the invention.

### Detailed Description of the Invention

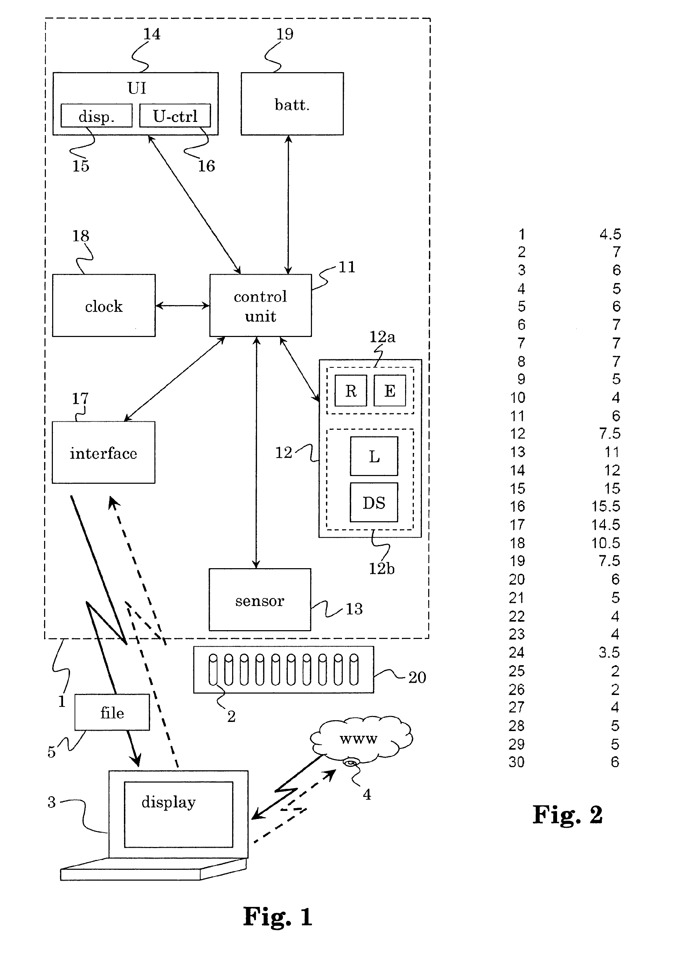

Fig. 1 shows a schematized block-diagrammatical illustration of a device 1 and its use. The device 1 is meant to monitor a physical or environmental property such as a temperature or a humidity to which an article 2 is exposed during a certain time span, wherein the article is usually subject to being transported within said time span. Article 2 can be contained in a package 20 comprising several articles. Device 1 can be a tag attached to package 20, e.g., the package 20 can be a pallet, and device 1 is a tag attached to the top of the pallet; or package 20 is a carton, and device 1 is glued to that carton. Device 1 could also be attached directly to article 2.

Device 1 comprises a sensor 13 for monitoring said environmental property, e.g., sensor 13 is or comprises a temperature sensor or a humidity sensor. Device 1 furthermore comprises a storage unit 12 for storing data, in particular digital data, a control unit 11, an energy supply 19 such as a battery, a clock generator 18, an interface 17 (e.g., a data interface, a communication interdace) and a user interface 14.

All the items or units shown within the square labelled 1 are usually contained in a housing of device 1. Thus, device 1 may prevailingly function independently of other devices and in different environments. With respect to said sensor 13, the magnitude sensed by sensor 13 usually is sensed within said housing, and it is assumed that the article 2 is exposed to the same conditions as those present in said housing, at least after some time for equilibration.

Storage unit 12 may comprise, as shown in Fig. 1, a volatile memory 12a such as RAM and non-volatile memory 12b such as flash RAM.

Energy supply 19 not only feeds electrical energy to control unit 11 and storage unit 12 (more particularly to volatile memory 12a), but also to other constituents of device 1 (this is not explicitely shown in Fig. 1).

User interface 14 typically comprises one or more user controls 16 such as buttons or switches and a display 15 such as a liquid crystal display (LCD). The latter allows a user of device 1 to perceive information provided by device 1, e.g., a current value sensed by sensor 13 or information whether or not article 2 has already been exposed to unsuitable conditions, and user control 16 allows the user to provide input to device 1, more particularly to control unit 11, e.g., for starting said time span (typically when the transport of the article begins, at a source location) and/or for indicating that said time span has ended (typically when the transport of the article has ended, at a destination location). It is also possible to provide that input - such as input provided by the user - may be received, (in device 1) in a wireless fashion by means of user interface 14, possibly also by means of interface 17.

An indication that said time span has ended may, e.g., originate from a user (e.g., a person receiving the article at a destination location) operating a user control 16 of said device, e.g., pressing a button of the device, or said user interrupting an electrical circuit of said device, or said indication is an indication that a pre-programmed end-time is reached.

Interface 17 allows to transfer data from device 1 to an external device such as an appliance 3, e.g., a personal computer. Said appliance may be connected to the internet 4.

Clock 18 enables device 1 to measure time and may provide control unit 11 with clock information.

Control unit 11 may be, e.g., a suitably programmed microprocessor.

An important aspect of the invention relates to the possibility to provide some data manipulation, in particular to do so already during said time span. On the one hand, this can save storage space, more particularly flash RAM, required in device 1, and on the other hand, this can make possible to provide or perceive important results already during said time span.

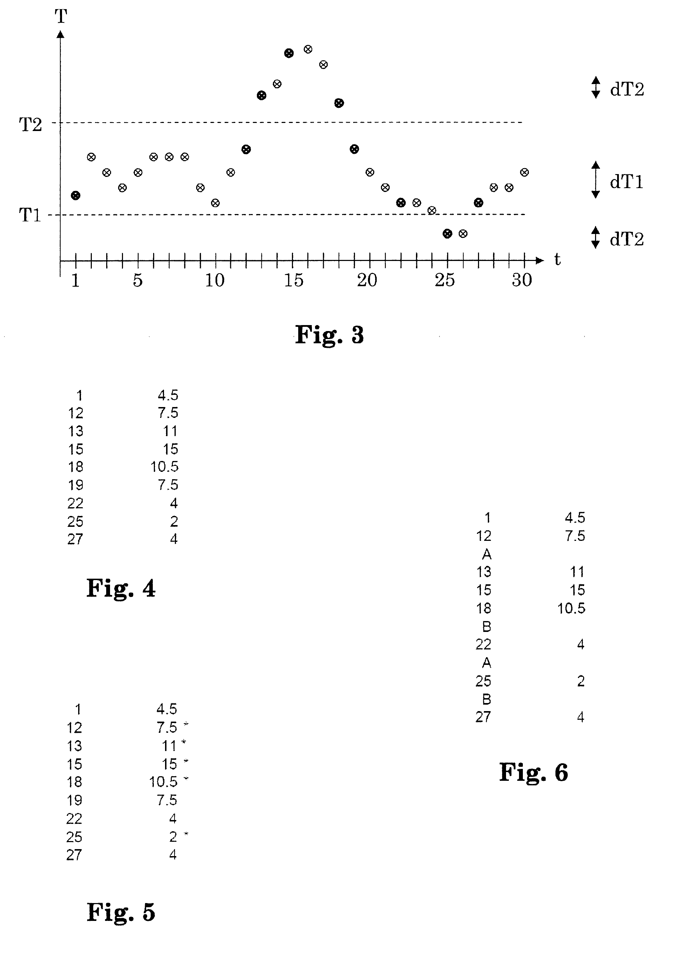

Device 1 is not a logger. A logger merely stores all the data points (representing measured temperatures and the like) until the end of said time span. Evaluations or data analysis would take place only or practically only after the end of said time span. But, here, it can be provided that device 1 continually determines whether or not said physical or environmental conditions to which article 2 (or more precisely device 1) is exposed are outside of allowed ranges for article 2. This can be accomplished each time that sensor 13 provides another sensing result, or in larger time intervals during said time span. And, importantly, it is possible to provide that instead of storing, in non-volatile memory 12b, all data points measured during the time span, i.e. storing the complete set of environmental data E, it is possible to strongly reduce this number of data points and, therewith, minimize the storage space needed in storage unit 12, more precisely in non-volatile memory 12b. A corresponding data set DS is illustrated in Fig. 4, and a data set comprising all environmental data E is illustrated in Fig. 2.

Environmental data E are temporarily stored in volatile memory 12a. These are basically the data provided by sensor 13. In addition, integrity raw data R may be stored in volatile memory 12a. Such data R are derived from data E by some processing, such as comparing of data, time integration, calculating moving averages or the like or a combination thereof.

From data R, it can be inferred whether or not limitations specified for said article 2 have been fully met (so far), or whether such limitations have been violated. Data E and data R are usually binary data, which reduces the required storage space and makes processing simple. It is possible to provide that data R are identical or substantially identical with data E.

The processing during said time span can make it possible to judge whether or not the article is still in order or has lost its integrity already during said time span (i.e. typically during the transport). E.g., corresponding information may be steadily displayed in display 15 or upon request, e.g., in reaction to operation of user control 16.

In order to be able to accomplish said processing yielding data R, limitation data L are provided already before the start of said time span. Data L may comprise, e.g., one or more threshold values for said physical or environmental conditions sensed by sensor 13 and possibly also time durations during which certain threshold values may or may not remain traversed. Accordingly, data L may well be considered data representative of predescribed limitations for said article 2. Data L are stored in storage unit 12, e.g., in non-volatile memory 12b.

The processing applied to data E in order to derive data R may comprise, e.g., determining if an upper threshold value for a sensed condition, e.g., for the ambient temperature, is exceeded by the environmental data E determined by sensor 13 for at least a predetermined minimum duration, or if the environmental data E determined by sensor 13 fall below a lower threshold value for a sensed condition for at least a predetermined minimum duration.

During said time span, data E, R and L are stored in storage unit 12, wherein it can be provided that only a portion of environmental data E are stored there at while deleting another (complementary) portion of data E. It can be useful to occasionally, e.g., periodically, e.g., between every one hour and every 5 days or so, store data R in non-volatile memory 12b, so as to minimize the danger of data loss.

Fig. 2 illustrates environmental data E, the right column indicating the measured values such as temperatures, e.g., in °C, i.e. the actual data E; and the left column indicates the data point number or the time at which the respective data point has been obtained, e.g., in terms of minutes from the beginning of the time span. Usually, the data representative of said physical or environmental conditions, i.e. the data points of data E, are created in regular time intervals. But it is also possible to provide that they are created in irregular time intervals. In general, typically, the data points are created on the average in time intervals of at least 5 seconds and at most 30 minutes, rather of at least 20 seconds and at most 10 minutes, typically of at least 30 seconds and at most 5 minutes.

With typical time span lengths of between 12 hours and 12 days, the storage space required for data E may be considerable. Below, it will be explained, how a data set DS can be obtained (in particular be obtained already inside device land during said time span), which requires much less storage space than full data E, but still very well reflects the most important information comprised in data E.

But firstly, a possible general function of device 1 and the related method shall be illustrated further: Possibly already during said time span or rather when an indication of an end of said time span has been received in device 1 (or more precisely in control unit 11), integrity data are derived from data R. Note that in case that it is not provided that data R are obtained during said time span, it is possible to derive the integrity data from data E (instead of from data R). Integrity data are text-representing data, the text being indicative of the integrity of article 2, as assessed from the conditions sensed by sensor 13. When the integrity data are displayed or otherwise presented (e.g., acoustically), a person can therefrom immediately infer whether article 2 is assumed to be in order or must be assumed to have undergone some damage during said time span. In the latter case, it can also be provided that integrity data also indicate which undesired conditions (as judged from data L) article 2 had been exposed to, and possibly also the time interval during which such an undue exposure has taken place.

In order to be available and readable, respectively, for a long time, the integrity data are stored in non-volatile memory 12b.

It is possible to distribute the data shown in Fig. 1 differently between said volatile memory 12a and non-volatile memory 12b, and it is possible to provide only one type of memory (volatile or non-volatile).

Fig. 3 is a graphic representation of the environmental data of Fig. 2. T designates temperature, e.g., in units of °C, t designates time, e.g., in units of minutes. Some of the data points are boldfaced. These data points are the data points of which a data set illustrated in Fig. 4 is comprised. The non-boldfaced data points are discarded data points. Discarded data points are assumed to contribute in a negligible way to the information content of data E.

The idea on which a decision is made as to whether a data point shall be discarded or not is based on the finding that usually, during long periods of time and thus for large numbers of data points, only small, usually irrelevantly small changes of the sensed physical or environmental conditions take place. Thus, if no sufficiently large change with respect to formerly determined values has taken place, the respective data point can be discarded.

The inventor has found that the following way of proceeding can result in a great reduction of number of data points while hardly decreasing the relevant information in the so-obtained data set DS having the greatly reduced number of data points. The first data point (representative of a first sensing result) is not discarded but stored in the data set DS. Then, each following value is compared to the value represented by the first data point and discarded until a deviation of the respective value exceeds a predetermined limit referred to as difference threshold. A corresponding data point, referred to as temporary extremum, is not discarded but added to the data set DS and serves as new reference for following data. I.e., again, each following value measured thereafter is compared to that new temporary extremum, until a deviation of the respective value exceeds said difference threshold. Again, we have another data point for the data set DS and a new temporary extremum to which subsequently obtained values are compared.

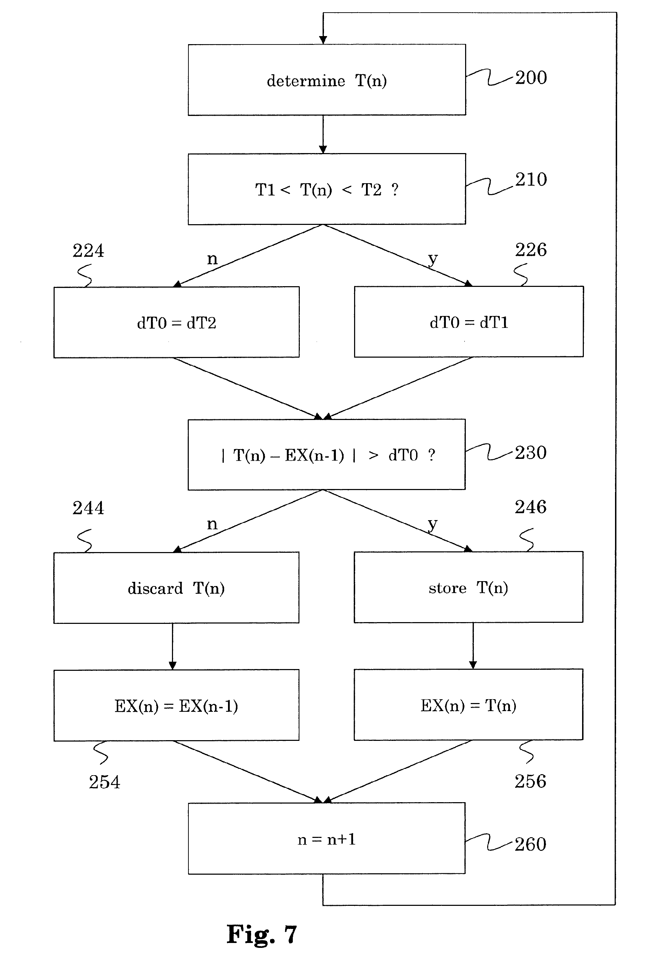

A corresponding algorithm is illustrated in Fig. 7 showing a flow chart illustrating how a data set DS like the one illustrated in Fig. 4 can be obtained, wherein beginning and end are not specifically illustrated. Such an algorithm can be implemented in control unit 11. In Fig. 7, n is an integer representing the point number (corresponding to the measurement number), like in the left column of Fig. 2. It is evident that n stands as well for the time at which a value is measured. T(n) represents a measured value, e.g., a temperature as obtained from sensor 13, at point number n (and at a corresponding point in time).

In a further refinement of the above-sketched method, Fig. 7 illustrates that it is possible to provide more than one difference threshold (namely dT1 and dT2) to which said deviation is compared and to select one of these in dependence of the currently determined value. Leaving out steps 210, 224 and 226 results in the provision of only one difference threshold (namely dT0) like in the method sketched above.

In step 200, value T(n) is obtained, e.g., by sensor 13. In step 210, T(n) is compared to temperatures T1 and T2 (cf. also Fig. 3). These temperatures T1, T2 are usually selected in dependence of data L. Thus, they are selected in dependence of predescribed limitations for article 2. E.g., they may be a lower and an upper limit, respectively, of temperatures to which article 2 may permanently exposed. If T(n) is within the value range T1 to T2, the difference threshold dT0 to be used in step 230 will be dT1 (cf. step 226). Otherwise, dT0 will be equal to dT2 (cf. step 224).

In step 230, the deviation of measured value T(n) from the most-recent temporary extremum EX(n-1) (temporary extremum) is compared to difference threshold dT0. (Note: In the beginning, EX(1) is set to T(1), and the flow chart of Fig. 7 holds for n ≥ 2.)

If the deviation is not large enough, T(n) is discarded (step 244), and the new temporary extremum EX(n) is the same as the most recent temporary extremum EX(n-1) (step 254). Otherwise, T(n) will be represented as a data point in the data set (step 246) and T(n) will be the new temporary extremum EX(n) (step 256). When the time has come to obtain the next temperature value, as illustrated by step 260, the algorithm starts over with step 200.

Storing the temporary extremum uses up very little memory space only, because in dependence of the result of step 230, the temporary extremum is either left unchanged or is replaced by T(n). Thus, storing the temporary extremum uses up the storage space of only a single measured value.

In Fig. 3, T1 and T2 as well as dT1 and dT2 are illustrated. The provision of two (or more) difference thresholds can contribute to a further meaningful reduction of data points in a data set. E.g., as illustrated in Fig. 3, it can be provided that temperature deviations may be rather large (cf. dT1) until a new value is not discarded but admitted to the data set, as long as the temperature is in the "allowed" range between T1 and T2. But outside the interval T1 to T2, where the article's integrity is endangered, already a smaller deviation (cf. dT2) results in recording a new data point in the data set. Thus, in the region or regions of greatest interest, the monitored condition, e.g., the temperature, can be monitored in more detail.

One can, of course, e.g., also provide different difference thresholds for values > T2 and for values < T1.

In typical applications, the number of data points in the data set DS is smaller than the number of measured values by a factor of at least 4 and often by a factor of at least 10. Typically, the number of measured values during the time span is at least 100 or rather at least 1000 and often at least 5000.

While Fig. 4 illustrates, in a way, a plain version of a data set DS, Figs. 5 and 6 show more elaborated versions of a data set DS.

When the data set DS is visualized, as can be accomplished, e.g., by transmitting the data set DS via a wireless or wirebound connection from interface 17 to external appliance 3, it can be valuable to have markers in the data set which allow to distinguish those data points which represent values outside a value range acceptable for article 2 from other data points. Those data points are of particular interest and often need further analysis. It can, for example, be provided that a particular character such as an asterisk ("*") is provided next to corresponding values, as is illustrated in Fig. 5. Or, as illustrated in Fig. 6, before a sequence of one or more data points representing a value outside the value range in question, a particular character (in Fig. 6: "A") is inserted in the data set, and after such a sequence, said particular or another character (in Fig. 6: "B") is inserted in the data set. This can strongly faciliate the analysis and graphic representation of the data points in the data set DS.

In particular if the data set DS, at least when transmitted via interface 17, comprises the data points (and optional characters) in form of text-representing data, an analysis can be readily accomplished using standard PC software, rendering dedicated data analysis software specifically created for such data sets superfluous.

It can, and usually will, be accomplished that for each data point in the data set DS, explicit time information is provided, such as

| | | |
|---|---|---|
| 2012-03-16 | 14:33:22 | 9.3 |
| 2012-03-16 | 14:38:21 | 9.6 |
| 2012-03-16 | 14:43:20 | 10.1 |
| ... | ... | ... |
| (day time measured value) | | |

Such real-time information will usually be preferred over relative timing information (such as data indicating the time elapsed from beginning of time span) or mere numbering of points (as in Fig. 2, 4, 5, 6).

It is possible to provide that, usually controlled by control unit 11, a file 5 (cf. Fig. 1) is produced which comprises data representative of a graphic representation of data set DS. The grahic representation of data set DS may, e.g., look like shown in the left portion of Fig. 3 (but not showing the not-boldfaced data points, as they are not comprised in data set DS). Therein, it is possible that subsequent data points are interconnetected by a line, in particular by a straight line. The x axis may designate the time at which a data point has been obtained (or at which a corresponding sensing has taken place), and the y axis may designate (as in Fig. 3) the monitored physical or environmental conditions (such as the temperature T). Pairs of data, in particular pairs comprising a data point and data representative of a corresponding point in time, may be, e.g., composed like in the exemplary data set DS discussed above comprising explicit time information. The file 5 may comprise further data, in particular further data indicative of the integrity of article 2. The file 5 may be provided in a widely used file format, e.g., in the well-known portable document format (pdf). This may simplify an evaluation of the article's integrity.

Such a file 5 may be transmitted via interface 17 to an external appliance such as item 3 (cf. Fig. 1), in particular for displaying contents of the file (more particularly said graphic representation), and possibly for further analysis.

It is furthermore possible to provide that during said time span, the data set is present in binary form, and that the data set is at a later point in time converted into a data set of text-representing data. The latter may, e.g., be accomplished in reaction to receiving, in said control unit, an indication that the end of said time span is reached; or in reaction to receiving, in said control unit, an indication that the data set shall be transmitted via interface 17.

Aspects of the embodiments have been described in terms of functional units. As is readily understood, these functional units may be realized in virtually any number of hardware and/or software components adapted to performing the specified functions.

## Claims

1. A method for obtaining information relating to the integrity of an article as assessed from an exposure of said article to physical or environmental conditions during a time span, said method comprising the steps of
b) subsequently obtaining a first to an N-th data point, each of said N data points representative of a value related to said physical or environmental conditions obtained by subsequently sensing said physical or environmental conditions a first to an N-th time;
c) discarding a portion of said N data points;
d) creating a data set comprising said N data points with the exception of said discarded data points.

2. The method according to claim 1, wherein at least one of:
- step c) is carried out during said time span; and
- step d) is carried out during said time span.

3. The method according to claim 1 or claim 2, wherein step c) comprises carrying out, for the second to the N-th data point, the steps of
c2) determining a deviation of the value represented by the respective data point from a value, referred to as temporary extremum, determined in dependence of earlier determined values;
c3) discarding the respective data point if said deviation is smaller than a difference threshold or if said deviation is smaller than or equal to a difference threshold.

4. The method according to claim 3, wherein said difference threshold is a predetermined value or is selected from two or more predetermined values.

5. The method according to claim 3 or claim 4, wherein step c) comprises carrying out, for the n-th data point, 2 ≤ n ≤ N, the step of
c1) determining the respective n-th temporary extremum;
wherein step c1) comprises the steps of
c11) assigning the value represented by the n-th data point to said n-th temporary extremum if a deviation of said value represented by the n-th data point from the n-1-th temporary extremum is at least as large as said difference threshold or if said deviation of said value represented by the n-th data point from the n-1-th temporary extremum is larger than said difference threshold;
c12) assigning the n-1-th temporary extremum to said n-th temporary extremum otherwise.

6. The method according to one of claims 3 to 5, wherein step c) comprises carrying out, for the second to the N-th data point, the steps of
c4) selecting one of two or more predetermined values in dependence of a value referred to as decisive value;
c5) assigning the selected predetermined value to said difference threshold.

7. The method according to claim 6, wherein step c4) comprises the step of
c41) determining whether or not said decisive value is within a predetermined value range;
c42) assigning a first of said two or more predetermined values to said difference threshold if said decisive value is comprised in said predetermined value range;
c43) assigning a second of said two or more predetermined values to said difference threshold if said decisive value is not comprised in said predetermined value range;
wherein said predetermined value range represents predescribed limitations for said article, and wherein said first of said two or more predetermined values is larger than said second of said two or more predetermined values.

8. The method according to one of the preceding claims, comprising carrying out, for each not discarded data point, the step of
f) determining whether or not the value represented by the respective data point is within a value range characteristic for said article;
and carrying out the step of
g) providing in said data set one or more markers distinguishing data points representative of a value within said value range characteristic for said article from data points representative of a value outside said value range characteristic for said article.

9. The method according to one of the preceding claims, comprising carrying out, for each data point of said portion of data points, the step of
e) deleting the respective discarded data point before an over-next data point is obtained.

10. The method according to one of the preceding claims, comprising the step of
a) providing a device to be located in proximity to said article during said time span;
wherein step b) is carried out by means of said device.

11. A device for obtaining information relating to the integrity of an article as assessed from an exposure of said article to physical or environmental conditions during a time span, said device comprising at least one sensor for sensing said physical or environmental conditions, a storage unit and a control unit, said control unit being structured and configured for controlling said at least one sensor such that a first to an N-th value related to said physical or environmental conditions are obtained by subsequently sensing said physical or environmental conditions a first to an N-th time by means of said sensor, said control unit being furthermore structured and configured for obtaining for each of said N values a data point and for discarding a portion of said N data points and for creating and storing in said storage unit a data set comprising said N data points with the exception of said discarded data points.

12. The device according to claim 11, wherein said control unit is structured and configured for carrying out, for the n-th data point, 2 ≤ n ≤ N, the steps of
C2) determining a deviation of the value represented by the respective data point from a value, referred to as n-1-th temporary extremum, determined in dependence of earlier determined values;
C3) discarding the respective data point if said deviation is smaller than a difference threshold or if said deviation is smaller than or equal to a difference threshold;
C1) determining the respective n-th temporary extremum;
wherein step C1) comprises the steps of
C11) assigning the value represented by the respective data point to said n-th temporary extremum if a deviation of said value represented by the respective data point from the n-1-th temporary extremum is at least as large as said difference threshold or if said deviation of said value represented by the respective data point from the n-1-th temporary extremum is larger than said difference threshold;
C12) assigning the n-1-th temporary extremum to said n-th temporary extremum otherwise.

13. The device according to claim 12, wherein said storage unit comprises a non-volatile memory in which data representative of said difference threshold are stored.

14. The device according to one of claims 16 to 18, wherein said storage unit comprises a non-volatile memory in which at least one of
- said data set; and
- data representative of a predetermined value range related to predescribed limitations for said article;
is stored.

15. The device according to one of claims 11 to 14, wherein said storage unit comprises at least one of
- an interface for transmitting said data set to an appliance different from said device; and
- a display for displaying data.
